# EUROPÄISCHE PATENTSCHRIFT

(11) **EP 3 041 659 B1**
(45) Veröffentlichungstag und Bekanntmachung des Hinweises auf die Patenterteilung: **12.02.2020**
(21) Anmeldenummer: 14747842.4
(22) Anmeldetag: 05.08.2014
(51) Int. Cl.: B29C 49/42, B29C 49/78, B29C 49/06, B29C 49/36, B29C 49/64, B29L 31/00, B29K 701/12, B65G 47/84

(54) **SYNCHRONLAUFSICHERUNG FÜR ÜBERGABESTATIONEN FÜR VORRICHTUNGEN ZUM HANDHABEN VON BEHÄLTERN SOWIE EINE VORRICHTUNG UND EIN VERFAHREN ZUR BLASFORMUNG VON BEHÄLTERN**
SYNCHRONOUS RUNNING SAFEGUARD FOR TRANSFER STATIONS FOR DEVICES FOR HANDLING CONTAINERS, AND A DEVICE AND A METHOD FOR BLOW-MOLDING CONTAINERS
DISPOSITIF POUR SÉCURISER LA MARCHE SYNCHRONE POUR POSTES DE TRANSFERT DESTINÉS À DES DISPOSITIFS DE MANIPULATION DE CONTENANTS ET DISPOSITIF ET PROCÉDÉ PERMETTANT LE MOULAGE PAR SOUFFLAGE DE CONTENANTS

(30) Priorität: 04.09.2013 DE 102013014618
(43) Veröffentlichungstag der Anmeldung: 13.07.2016
(73) Patentinhaber: KHS Corpoplast GmbH, 22145 Hamburg (DE)
(72) Erfinder: LINKE, Michael, 22159 Hamburg (DE); LITZENBERG, Michael, 21502 Geesthacht (DE); BAUMGARTE, Rolf, 22926 Ahrensburg (DE); LEWIN, Frank, 22889 Tangstedt (DE)
(74) Vertreter: Hausfeld, Norbert
(86) Internationale Anmeldenummer: PCT/EP2014/002143
(87) Internationale Veröffentlichungsnummer: WO 2015/032463

(56) Entgegenhaltungen:
- DE-A1- 10 325 693
- DE-A1- 19 906 438
- FR-A1- 2 252 272
- US-A1- 2010 159 060
- US-A1- 2011 260 372

## Beschreibung

Die Erfindung betrifft eine Synchronlaufsicherung für Übergabestationen für Vorrichtungen zum Handhaben von Behältern, insbesondere zum Handhaben von flaschenartigen Behältern aus Glas oder Kunststoff mit einem ersten und eine zweiten Drehelement, die jeweils mit Aufnahmeelementen für die Behälter versehen sind und jeweils einen motorischen Antrieb aufweisen, wobei die Drehelemente so zueinander angeordnet sind, dass die Behälter in einem Übergabebereich von einem der ersten Aufnahmeelemente auf eines der zweiten Aufnahmeelemente übertragbar sind.

Weiterhin betrifft die Erfindung eine Vorrichtung zur Blasformung von Behältern aus einem thermoplastischen Material mit wenigstens zwei Behandlungsstationen mit Werkzeugen zum Aufnehmen und Halten von Vorformlingen, beispielsweise einer Heizvorrichtung zur Erwärmung der Vorformlinge, und einer Blasvorrichtung zur Ausformung von Behältern aus Vorformlingen, die mit Blasstationen versehen ist, mit wenigstens einer Übergabevorrichtung zum Transfer der Vorformlinge von einer Behandlungsstation zu einer weiteren Behandlungsstation mit Werkzeugen, die zur Entnahme der Vorformlinge aus der Behandlungsstation, dem Transport der Vorformlinge zur weiteren Behandlungsstation und zur Abgabe der Vorformlinge an die weitere Behandlungsstation ausgelegt sind, wobei wenigstens eine der Behandlungsstationen und/oder die wenigstens eine Übergabevorrichtung wenigstens eine mechanische Steuervorrichtung zur Vorgabe der Bewegung der Werkzeuge aufweisen, wobei die Werkzeuge in ihrer Bewegung zueinander einen Eingriffsbereich aufweisen und so zueinander angeordnet sind, dass die Bewegung der Werkzeuge in einem Normalbetrieb berührungsfrei erfolgt, und wobei der Antrieb der Bewegung der Werkzeuge der Behandlungsstationen und/oder der Übergabevorrichtung mittels Einzelantrieben erfolgt, die steuerungstechnisch synchronisiert sind, und ein Verfahren zur Sicherung von Werkzeugen zum Transport von Vorformlingen oder Behältern, bevorzugt Dorne oder Zangen, in einer solchen Vorrichtung.

Zum Verpacken von flüssigen Lebensmitteln und Getränken werden Behälter verwendet. Hierbei handelt es sich insbesondere um Flaschen aus Glas oder Kunststoff oder um so genannte Pouches, aber in dieser Anmeldung werden unter Behälter auch Vorformlinge, Verschlüsse oder dergleichen verstanden. Die Behälter werden in einem Herstellungsprozess an verschiedenen Vorrichtungen erstellt und anschließend an einer weiteren Vorrichtung befüllt. Während des Herstell- und Füllprozesses ist es notwendig die Behälter zu transportieren und zwischen den einzelnen Prozessstufen von einer Station an die andere zu übergeben.

Beispielhaft sei hier das Herstellen von Behältern aus Kunststoff in einer Blasvorrichtung genannt. Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfasst auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades als Übergabestation zwischen einem Blasrad und einer Ausgabestrecke beschrieben. Weitere Vorrichtungen und Verfahren aus dem technischen Hintergrund sind noch in den Druckschriften DE2455189 oder FR2252272A1 und DE102008020116A1 beschrieben.

Ursprünglich wurden die Transportvorrichtungen in so einer Bearbeitungsmaschine, insbesondere bei solchen, die mit hoher Geschwindigkeit sehr genau, beispielsweise teilungsgenau bzw. synchron zusammenarbeiten mussten, rein mechanisch mit einander verkoppelt. Beispielsweise wurden die Ein- und Auslaufsterne eines Füllers oder eine Etikettiermaschine durch direkte schlupffreie Antriebsverbindung, also durch Zahnräder, Zahnriemen und Zahnriemenräder, mit einander starr also "teilungsrichtig" verbunden. Bei dieser Lösung führte ein Störfall, beispielsweise ein Stromausfall, lediglich zu einem Maschinenstillstand, nicht aber zu einem Verlust des Synchronlaufs der mit einander verbundenen Maschinenkomponenten.

Aus Kostengründen wird auf eine starre Kopplung verzichtet, wodurch auf hochpreisige, montageintensive und verschleißfreudige Getriebe, Gelenkwellen usw. verzichtet werden kann. Stattdessen werden die einzelnen Bauteile wie beispielsweise Einlaufstern, Auslaufstern, Rotor der Behandlungsmaschine usw. jeweils mit eigenen Antriebsmotoren versehen, wobei es sich bei den Antriebsmotoren beispielsweise um Servo-Motoren handelt, welche vorzugsweise auch mit Drehgebern ausgerüstet sind. Drehgeber melden den wirklichen Ist-Drehwinkel an die Steuerung zurück. Im Falle von Abweichungen zwischen Soll- und ist-Drehwinkel erfolgt automatisch eine Korrektur, so dass der Motor den Soll-Drehwinkel erreicht. Dieses gilt für "statische" Positionieraufgaben, bei denen ein Motor einen Soll-Drehwinkel erreichen soll und dann ohne weitere Drehbewegung verharrt, bis es zu einer erneuten Änderung des Solldrehwinkels kommt. Weiterhin gilt dieses auch für "dynamische" Positionieraufgaben, bei denen Drehbewegungen über mehrere Stunden mit einander gleichzeitig und synchron zu einander ablaufen sollen.

Im Vorliegen eines Störfalls wird das von der Drehsynchronität abweichende Drehelement antriebslos und frei drehbar geschaltet. Gleichzeitig wird die gesamte Anlage in den Stillstand gebracht. Durch das Vorliegen der in dem frei geschalteten Drehelement innewohnenden Restenergie, die langsamer abgebaut wird, als die der aktiv gebremsten Drehelement, kann es entsprechend zu einem "Überholen" durch das frei geschaltete Element und damit zur Kollision kommen.

Um Beschädigungen der Maschinen und damit verbundene Produktionsausfälle zu vermeiden, muss entweder die Synchronität der Bewegungen nicht nur im Betriebszustand gewährleistet sein, sondern auch bei Störfällen wie Stromausfall, plötzlichen Belastungsschwankungen usw. unbedingt erhalten bleiben, oder die Beschädigungen müssen auf andere Weise vermieden werden.

Aufgabe der vorliegenden Erfindung ist es, eine Übergabestation der einleitend genannten Art zu verbessern, so dass über eine entsprechende Synchronlaufsicherung die Synchronität im Störfall beizubehalten, und/oder eine Vorrichtung und Verfahren zur Blasformung von Behältern der einleitend genannten Art zu verbessern, um bei Verlust der Synchronität im Störfall das Risiko von Beschädigungen zu reduzieren.

Diese Aufgabe wird erfindungsgemäß hinsichtlich der Synchronlaufsicherung dadurch gelöst, dass die Drehelemente jeweils drehverbunden ein Steuerelement mit Eingriffselementen aufweisen, dass die Steuerelemente sich kämmend miteinander im Eingriff befinden, wobei die Steuerelemente so angeordnet sind, dass sie sich im Betriebsfall während der Drehbewegung der Drehelemente berührungslos im Eingriff befinden und dass sie sich im Störungsfall berührend im Eingriff.

Hierdurch wird zum einen der Vorteil des individuellen Antriebs der einzelnen Drehelemente erhalten und es wird ist im Betriebsfall nicht notwendig, eine Energie verbrauchende Verbindung zwischen den Elementen vorzusehen. Gleichzeitig wird auf einfache Weise sichergestellt, dass ein "Überholen" ausgeschlossen ist, so dass eine beschädigende Kollision unterbleibt.

Eine vorteilhafte Lehre der Erfindung sieht vor, dass es sich bei den Eingriffelementen um Zähne, Bolzen, Vorsprünge oder Vertiefungen handelt. Weiterhin ist vorteilhaft, dass es bei dem Steuerelement um ein Zahnrad und/oder um ein Bolzenrad handelt. Diese Elemente sind einerseits besonders für das Bereitstellen der berührungslosen Eingriffsoption geeignet und stellen dabei gleichzeitig sicher, dass die Mitnahme im Störfall gegeben ist.

Eine weitere Lehre der Erfindung sieht vor, dass im Betriebsfall zwischen den Eingriffelementen ein Spalt vorgesehen ist, wobei der Spalt so ausgelegt ist, dass die Aufnahmeelemente im Störungsfall berührungsfrei sind. Hierdurch wird auf einfache Weise die Kollision der Aufnahmeelemente vermieden.

Eine weitere Lehre der Erfindung sieht vor, dass die zuvor beschriebene Synchronlaufsicherung in einer nachfolgend beschriebenen Vorrichtung zur Blasformung vorgesehen ist. Hierdurch wird es möglich, bestimmte Abschnitte der Vorrichtung über eine Synchronlaufsicherung zu sichern, während andere Abschnitte von diesen synchron laufenden Abschnitten entkoppelt werden.

Weiterhin wird die Aufgabe erfindungsgemäß hinsichtlich der Vorrichtung zur Blasformung dadurch gelöst, dass die Werkzeuge wenigstens einer der Behandlungsstationen und/oder der Übergabevorrichtung in einem Störungsfall durch eine Bewegung wenigstens eines Abschnitts der Steuervorrichtung aus dem Eingriffsbereich heraus bewegbar sind.

Hierdurch wird bewirkt, dass eine Kollision der Werkzeuge vermieden wird, wenn ein Synchronitätsverlust beispielsweise der Antriebe und damit der Werkzeuge eintritt.

Eine vorteilhafte Lehre der Erfindung sieht vor, dass es sich bei der mechanischen Steuerung um eine Kurvensteuerung handelt. Diese stellt eine bevorzugte einfache Steuerungsmöglichkeit dar.

Eine vorteilhafte Lehre der Erfindung sieht vor, dass der Abschnitt der Kurvensteuerung korrespondierend zum Eingriffsbereich bewegbar ausgeführt ist, wobei es sich bevorzugt um eine vertikale Bewegung handelt. Es hat sich herausgestellt, dass diese Umsetzung besonders effektiv und kostengünstig ist

Eine vorteilhafte Lehre der Erfindung sieht vor, dass Bewegung der Steuervorrichtung über einen Antrieb, bevorzugt über Hydraulikzylinder erfolgt. Eine vorteilhafte Lehre der Erfindung sieht vor, dass es sich bei der den Werkzeugen um Dorne oder Zangen handelt.

Eine vorteilhafte Lehre der Erfindung sieht vor, dass mehrere Abschnitte vorgesehen sind, die in ihrer Bewegung mechanisch miteinander gekoppelt sind.

Eine vorteilhafte Lehre der Erfindung sieht vor, dass es sich bei den Behandlungsstationen um eine Heizvorrichtung, eine Blasvorrichtung, eine Sterilisationsvorrichtung, eine Kühlvorrichtung, eine zusätzliche Heizvorrichtung, Reinigungsvorrichtung, Etikettiervorrichtung, und/oder Füllvorrichtung handelt.

Eine weitere vorteilhafte Lehre der Erfindung sieht vor, dass die Vorrichtung zur Blasformung eine zuvor beschriebene Synchronlaufsicherung aufweist. Hier durch findet eine zusätzliche Sicherung der Werkzeuge durch das Sicherstellen der Synchronisation zumindest in Abschnitten der Vorrichtung zur Blasformung statt.

Die Aufgabe wird erfindungsgemäß hinsichtlich des Verfahrens dadurch gelöst, dass die Werkzeuge wenigstens einer der Behandlungsstationen und/oder der Übergabevorrichtung in einem Störungsfall durch eine Bewegung wenigstens eines Abschnitts der Steuervorrichtung aus dem Eingriffsbereich heraus bewegt werden.

Eine vorteilhafte Lehre der Erfindung sieht vor, dass der Abschnitt der Kurvensteuerung korrespondierend zum Eingriffsbereich bewegt wird, wobei es sich bevorzugt um eine vertikale Bewegung handelt.

In der Zeichnung sind Ausführungsbeispiele der Erfindung schematisch dargestellt. Es zeigen:
- Fig. 1: eine Übersichtsdarstellung einer ersten Vorrichtung zur Blasformung von Behältern, die eine Heizeinrichtung, ein mit Blasstationen versehenes rotierendes Blasrad sowie diverse Übergabeeinrichtungen aufweist,
- Fig. 2: eine vergrößerte Darstellung des Ausgaberades mit zugeordneter doppelgleisiger Ausgabestrecke,
- Fig. 3: eine räumliche Darstellung eines erfindungsgemäßen Drehelements als Übergabeeinrichtung,
- Fig. 4: eine teilgeschnittene räumliche Darstellung einer erfindungsgemäßen Synchronlaufsicherung,
- Fig. 5: eine vergrößerte Detaildarstellung zu Fig. 4, und
- Fig. 6: eine weitere Detaildarstellung in Draufsicht zu Fig. 4 der sich im Eingriff befindlichen erfindungsgemäßen Synchronlaufsicherung.
- Fig. 7: eine Übersichtsdarstellung einer alternativen Vorrichtung zur Blasformung von Behältern, die eine Heizeinrichtung, ein mit Blasstationen versehenes rotierendes Blasrad sowie diverse Übergabevorrichtungen aufweist,
- Fig. 8: eine räumliche Darstellung einer alternativen Übergabevorrichtung mit montierten Werkzeugen,
- Fig. 9: eine räumliche Darstellung eines Übergabeabschnitts einer Heizvorrichtung im Eingriff mit einer durch ihre Werkzeuge angedeuteten Übergabevorrichtung, deren Werkzeuge sich im Eingriff mit den Werkzeugen der Heizvorrichtung befinden,
- Fig. 10: eine Darstellung zu Fig. 9 ohne Vorformlinge,
- Fig. 11: eine räumliche Darstellung eines Übergabeabschnitts einer Heizvorrichtung im eingriff mit einer durch ihre Werkzeuge angedeuteten Übergabevorrichtung, deren Werkzeuge sich nicht im Eingriff mit den Werkzeugen der Heizvorrichtung befinden, und
- Fig. 12: eine Darstellung zu Fig. 11 ohne Vorformlinge.

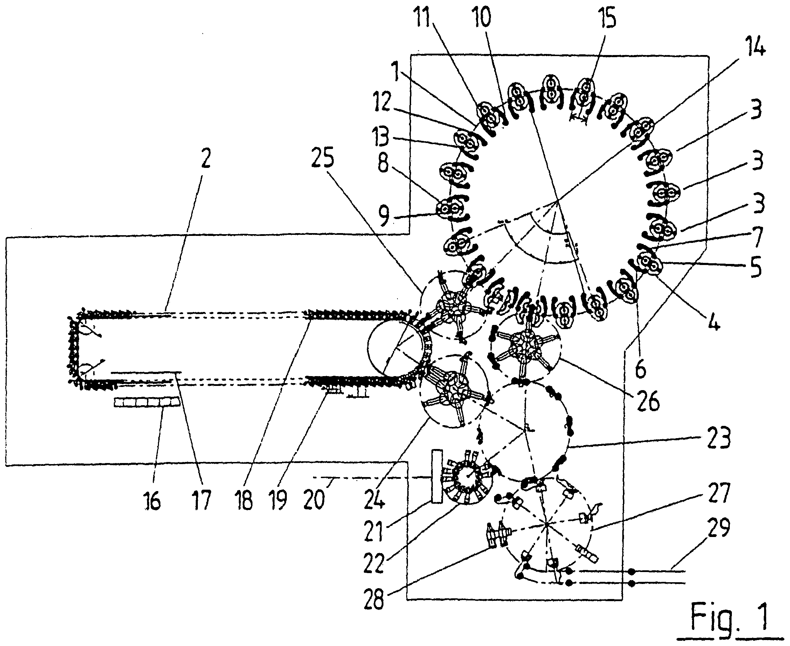

Fig. 1 zeigt den grundsätzlichen Aufbau einer Blasmaschine, die mit einem rotierenden Blasrad 1 sowie einer Heizeinrichtung 2 für zu temperierende Vorformlinge ausgestattet ist. Entlang eines Umfanges des Blasrades 1 sind Blasstationen 3 angeordnet, die jeweils Formträger 4, 5 aufweisen. Die Formträger 4, 5 sind von Tragarmen 6, 7 gehaltert und dienen zur Positionierung von Formelementen, typischerweise von Formhälften 8, 9.

Die Tragarme 6, 7 sind relativ zu Basisschwenklagern 10, 11 drehbeweglich gelagert. Darüberhinaus sind die Tragarme 6, 7 über Schwenklager 12, 13 drehbeweglich mit den Formträgern 4, 5 gekoppelt.

Das Blasrad 1 rotiert relativ zu einer Blasradachse 14 und die Basisschwenklager 10, 11 sind in radialer Richtung der Blasradachse 14 zugewandt angeordnet. Die Basisschwenklager 10, 11 weisen relativ zueinander einen Lagerabstand 15 auf.

Bei der in Fig. 1 dargestellten Ausführungsform ist die Heizeinrichtung 2 mit einer Transportkette 18 versehen, die die zu erwärmenden Vorformlinge entlang von Heizelementen 16 transportiert. Die Heizelemente 16 können beispielsweise als IR-Strahler ausgebildet sein. Es ist aber ebenfalls möglich, in anderen Frequenzbereichen operierende Strahler oder eine Konvektionsheizung vorzusehen. Bei der dargestellten Ausführungsform sind entlang des Transportweges der Vorformlinge die Heizelemente 16 einseitig angeordnet und den Heizelementen 16 gegenüberliegend sind Reflektoren 17 vorgesehen. Grundsätzlich ist auch eine beidseitige Anordnung von Heizelementen 16 realisierbar. Im Bereich der Transportkette 18 sind die Vorformlinge von Trageeinrichtungen 19 gehaltert. Hierbei kann es sich beispielsweise um eine Halterung der Vorformlinge über Zangen oder Spreizdorne handeln

Eine Eingabe der Vorformlinge kann derart erfolgen, dass die Vorformlinge zunächst entlang einer Transportschiene 20, in deren Bereich die Vorformlinge mit ihren Mündungen nach oben angeordnet sind, einer Wendeeinrichtung 21 zugeführt werden, die die Vorformlinge mit ihren Mündungen nach unten dreht und zu einem Eingaberad 22 übergibt. Das Eingaberad 22 ist durch Übergaberäder 23, 24 mit der Heizeinrichtung 2 gekoppelt. Insbesondere ist daran gedacht, die Vorformlinge bereits im Bereich des dem Eingaberad 22 zugewandten Übergaberades 23 auf die Trageinrichtungen 19 aufzusetzen.

Die Heizeinrichtung 2 ist von einem Übergaberad 25 mit dem Blasrad 1 gekoppelt und im Bereich der Blasstationen 3 fertiggeblasene Behälter werden vom Blasrad 1 zu einem Entnahmerad 26 übergeben. Das Entnahmerad 26 ist über das Übergaberad 23 mit einem Ausgaberad 27 gekoppelt, das die geblasenen Behälter 28 in den Bereich einer Ausgabestrecke 29 überführt. Im Bereich des Ausgaberades 27 kann eine zweckmäßige Änderung der räumlichen Orientierung der geblasenen Behälter 28 durchgeführt werden.

Zur Ermöglichung einer hohen Wärmeeinbringung in die Vorformlinge ohne Gefahr einer Überhitzung der äußeren Oberfläche ist es möglich, im Bereich der Heizeinrichtung 2 zusätzlich zu den Heizelementen 16 Gebläse anzuordnen, die Kühlluft in den Bereich der Vorformlinge leiten. Beispielsweise ist es möglich, in Transportrichtung der Vorformlinge abwechselnd Heizelemente 16 und Gebläse nacheinander zu positionieren.

Um einen Vorformling derart in einen Behälter 28 umformen zu können, dass der Behälter 28 Materialeigenschaften aufweist, die eine lange Verwendungsfähigkeit von innerhalb des Behälters 28 abgefüllten Lebensmitteln, insbesondere von Getränken, gewährleisten, müssen spezielle Verfahrensschritte bei der Beheizung und Orientierung der Vorformlinge eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

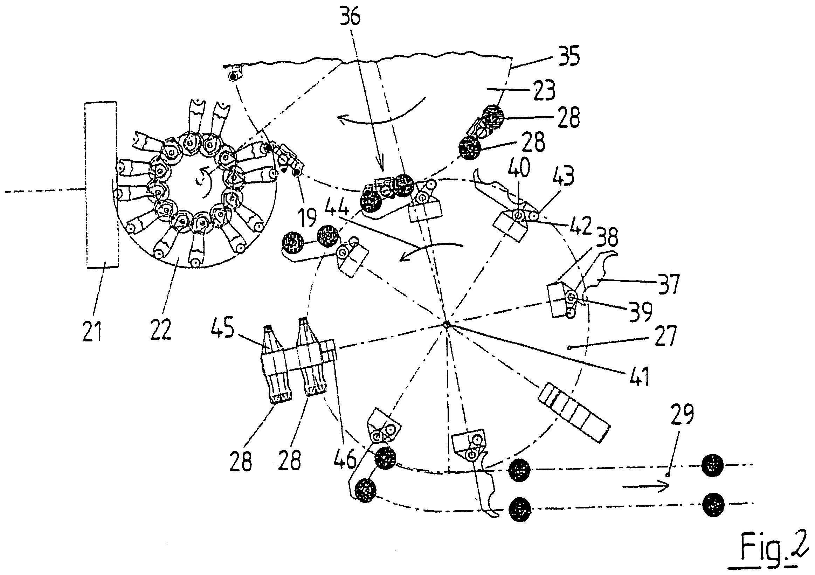

Fig. 2 zeigt in einer vergrößerten Darstellung das Ausgaberad 27 sowie die zugeordneten Bereiche des Übergaberades 23 sowie der Ausgabestrecke 29. Ebenfalls sind die Wendeeinrichtung 21 und das Eingaberad 22 dargestellt. Entlang eines Umfanges 35 des Übergaberades 23 sind jeweils zwei Behälter 28 in Bewegungsrichtung hintereinander von einer gemeinsamen Trageinrichtung 19 gehalten. In einem Übergabebereich 36 werden die Behälter 28 von der Trageinrichtung 19 zu Halteelementen 37 des Ausgaberades 27 überführt. Eine Fixierung der Behälter 28 im Bereich der Halteelemente 37 kann beispielsweise durch Unterdruckeinwirkung erfolgen.

Im Bereich der Trageinrichtung 19 können die Behälter 28 beispielsweise aufgesteckt sein. Bei einem derartigen Halterungskonzept erfolgt im Übergabebereich 36 ein Abheben der Behälter 28 von den Trageinrichtungen 19. Ebenfalls ist es aber auch denkbar, die Behälter 28 im Bereich der Trageinrichtungen 19 von Zangen oder andersartigen Klemmelementen zu haltern.

Im Bereich des Ausgaberades 27 sind für die Halteelemente 37 Sockel 38 vorgesehen, die über Drehgelenke 39 mit den Halteelementen 37 verbunden sind. Drehachsen 40 der Drehgelenke 39 erstrecken sich im Wesentlichen parallel zu einer Rotationsachse 41 des Ausgaberades 27.

Im Bereich ihrer den Drehgelenken 39 zugewandten Ausdehnungen sind die Halteelemente 37 mit Positionierhebeln 42 versehen, die Kurvenrollen 43 tragen. Die Kurvenrollen 43 sind in nicht dargestellten Kurvenbahnen geführt und geben die jeweiligen Schwenkbewegungen der Halteelemente 37 relativ zu den Sockeln 38 vor.

Relativ zu einer Drehrichtung 44 des Ausgaberades 27 sind die Halteelemente 37 in Bewegungsrichtung relativ zu den Sockeln 38 voreilend angeordnet. Unmittelbar nach einer Übergabe der Behälter 28 an die Halteelemente 37 sind die Behälter 28 zunächst in Umfangsrichtung des Ausgaberades 27 hintereinander positioniert. Im Anschluss an die Übergabe wird von den Positionierhebeln 42 eine Schwenkbewegung der Halteelemente 37 relativ zu den Drehachsen 40 vorgegeben. Die Schwenkbewegung wird solange durchgeführt, bis eine Verbindungslinie der Behälter 28 im Wesentlichen in radialer Richtung auf die Rotationsachse 41 orientiert ist.

Zusätzlich zu der bereits erläuterten Schwenkbewegung der Halteelemente 37 wird zwischen dem Übergabebereich 36 und der Ausgabestrecke 29 eine weitere Drehbewegung der Halteelemente 37 durchgeführt. Bei dieser Drehbewegung werden Längsachsen 45 der Behälter 28 um 180° gedreht. Zur Durchführung dieser Drehbewegung kann der Sockel 38 mehrteilig ausgebildet sein, wobei die Sockelelemente von einer Sockeldrehachse 46 miteinander verbunden sind, die sich im Wesentlichen in radialer Richtung relativ zur Drehachse 40 des Ausgaberades 27 erstreckt. Die Behälter können hierdurch ausgehend von einer räumlichen Orientierung im Bereich des Übergaberades 23 mit einem Mündungsbereich nach unten in eine räumliche Orientierung mit einem Mündungsbereich nach oben überführt werden.

Durch die in Bewegungsrichtung voreilende Anordnung der Halteelemente 37 relativ zu den Sockeln 38 im Übergabebereich 36 wird zum einen die für die Durchführung der Positionsänderungen erforderliche Zeit bis zur Übergabe an die Ausgabestrecke 39 verlängert, darüber hinaus wird dafür Sorge getragen, dass sich auch nach der Durchführung der Drehbewegung um 180° die Behälter 28 bei einer Überführung zur Ausgabestrecke 29 in Bewegungsrichtung vor den Halteelementen 37 befinden.

Bei dem erläuterten Ausführungsbeispiel weisen die Halteelemente 37 gerundet konturierte Aufnahmemulden 47 auf, in die die Behälter 28 einsetzbar sind. Die Aufnahmemulden 47 verlaufen dabei mit ihren Begrenzungsflächen entlang eines Teiles des Umfanges der Behälter 28. Im Bereich der Aufnahmemulden 47 können Saugtaschen angeordnet werden, um die Behälter 28 durch Unterdruckeinwirkung zu haltern.

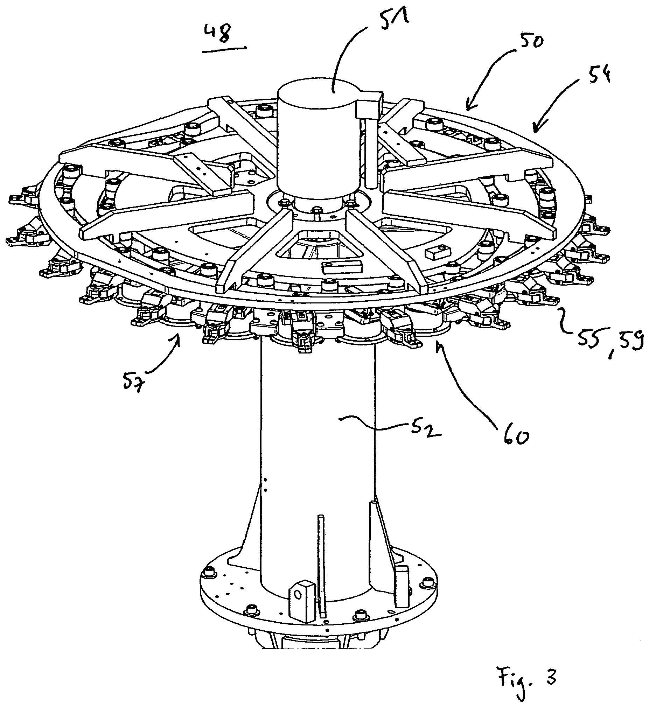

Fig. 3 zeigt in räumlicher Darstellung eine Übergabestation 48 in analoger bzw. alternativer Ausführung den zuvor genannten Übergaberädern 23, 24, 25 mit einem an der Übergabestation 48 angeordneten Servo-Motor 51. Die Übergabestation 48 stellt dabei das erste oder zweite erfindungsgemäße Drehelement dar. Hierbei kann es sich aber auch direkt um das Blasrad oder einen Umlenkbereich der Heizstrecke oder dgl. Analog Fig. 1 und 2 handeln.

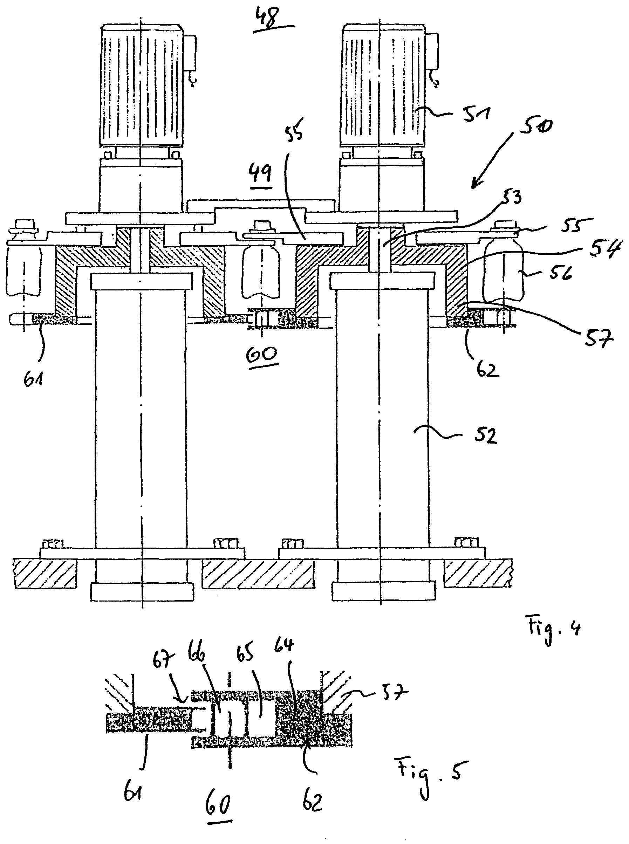

Die Übergabestation 48 weist ein Übergaberad 50 auf, dass auf einem Lagergehäuse 52 sitzt, in dem auch die Antriebswelle 53 (siehe Fig. 4) gelagert ist. Das Übergaberad 50 weist einen Träger 54 auf, an dem die Aufnahmeelemente 55 für die Behälter 56 angeordnet sind. Das Übergaberad 50 weist einen Basisträger 57 auf, an dem ein Steuerelement 61, 62 als Bestandteil der Synchronlaufsicherung 60 angeordnet ist.

In Fig.4 sind zwei Übergaberäder 50 dargestellt, wobei das linke Übergaberad mit Aufnahmeelemente 59 angeordnet sind, die so ausgeführt sind, dass sie im Übergabebereich 49, sofern dieses notwendig ist, zusammen mit den Aufnahmeelementen 55 die Flasche 56 greifen können. Die Übergaberäder 50 können dabei ein Entnahme- oder Aufgaberad, ein Blasrad, eine Übergabestation oder auch ein Abschnitt eine Heizstrecke oder dergleichen sein.

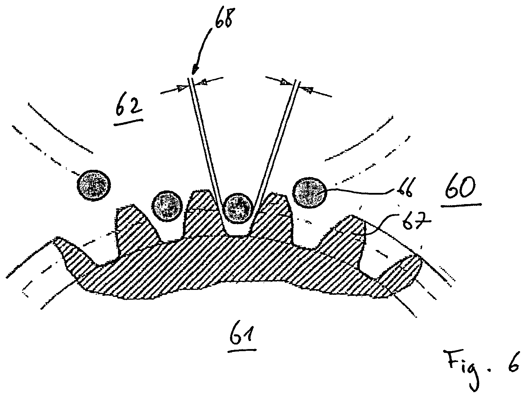

Bei dem ersten Steuerelement 61 handelt es sich um ein Zahnrad. Bei dem zweiten Steuerelement 62 handelt es sich um ein Bolzenrad. Diese stellen die Synchronlaufsicherung 60 dar. Eine seitliche Schnittansicht dazu ist vergrößert in Fig. 5 dargestellt. Fig. 6 zeigt eine Draufsicht auf die Darstellung von Fig. 5.

Das Bolzenrad 62 setzt sich zusammen aus einem Grundträger 64, der Aussparungen 65 aufweist, in den Bolzen 66 angeordnet sind. Die Aussparungen 65 und die Bolzen 66 sind dabei so ausgelegt, dass diese mit den Zähnen 67 des Zahnrades 61 in Eingriff bringbar sind (siehe Fig. 6). Der Bolzen 66 und die Zähne 67 stellen dabei die erfindungsgemäßen Eingriffelemente dar.

Bei einem synchronen Lauf von Bolzenrad 62 und Zahnrad 61 liegt stets ein Luftspalt 68 an der engsten Stelle zwischen Bolzen 66 und den Zähnen 67. Ein zu großer Schlupf im synchronen Lauf der Steuerelemente 61, 62 und damit der Übergaberäder 50 wird hier mechanisch begrenzt bzw. abgesichert durch den Formschluss, wenn der Bolzen 66 mit einer Flanke des Zahns 67 in Berührung kommt. Dadurch wird ein zu großer Versatz der Übergaberäder 50 zueinander verhindert, der zu Schäden an den Aufnahmeelementen 55, 59 (Zangen etc.) führen kann.

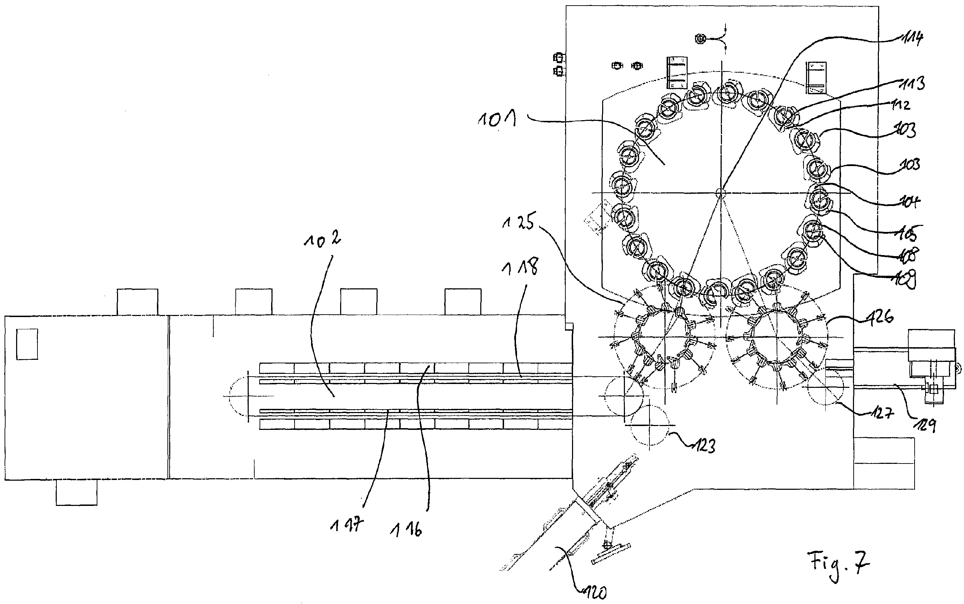

Fig. 7 zeigt den grundsätzlichen Aufbau einer alternativen Blasmaschine, die mit einem rotierenden Blasrad 101 sowie einer Heizeinrichtung 102 für zu temperierende Vorformlinge ausgestattet ist. Entlang eines Umfanges des Blasrades 101 sind Blasstationen 103 angeordnet, die jeweils Formträger 104, 105 aufweisen. Die Formträger 104, 105 dienen zur Positionierung von Formelementen, typischerweise von Formhälften 108, 109. Die Formträger 104, 105 sind über Schwenklager 112, 113 drehbeweglich mit den Formträgern 104, 105 gekoppelt. Das Blasrad 101 rotiert relativ zu einer Blasradachse 114.

Bei der in Fig. 7 dargestellten Ausführungsform ist die Heizeinrichtung 102 mit einer Transportkette 118 versehen, die die zu erwärmenden Vorformlinge entlang von Heizelementen 116 transportiert. Die Heizelemente 116 können beispielsweise als IR-Strahler ausgebildet sein. Es ist aber ebenfalls möglich, in anderen Frequenzbereichen operierende Strahler oder eine Konvektionsheizung vorzusehen. Bei der dargestellten Ausführungsform sind entlang des Transportweges der Vorformlinge die Heizelemente 116 einseitig angeordnet und den Heizelementen 116 gegenüberliegend sind Reflektoren 117 vorgesehen. Grundsätzlich ist auch eine beidseitige Anordnung von Heizelementen 16 realisierbar. Im Bereich der Transportkette 118 sind die Vorformlinge von Trageeinrichtungen bzw. Werkzeugen (in Fig. 7 nicht dargestellt) gehaltert. Hierbei kann es sich beispielsweise um eine Halterung der Vorformlinge über Zangen oder Spreizdorne handeln.

Eine Eingabe der Vorformlinge kann Über eine Zuführeinrichtung 120 erfolgen. Die Zuführeinrichtung 120 ist durch ein Übergaberad 123 mit der Heizeinrichtung 102 gekoppelt.

Die Heizeinrichtung 102 ist von einem Übergaberad 125 mit dem Blasrad 101 gekoppelt und im Bereich der Blasstationen 103 fertiggeblasene Behälter werden vom Blasrad 101 zu einem Entnahmerad 126 übergeben. Das Entnahmerad 126 ist mit einem Ausgaberad 127 gekoppelt, das die geblasenen Behälter in den Bereich einer Ausgabestrecke 129 überführt. Im Bereich des Ausgaberades 127 kann falls notwendig eine Änderung der räumlichen Orientierung der geblasenen Behälter durchgeführt werden.

Zur Ermöglichung einer hohen Wärmeeinbringung in die Vorformlinge ohne Gefahr einer Überhitzung der äußeren Oberfläche ist es möglich, im Bereich der Heizeinrichtung 102 zusätzlich zu den Heizelementen 116 Gebläse anzuordnen, die Kühlluft in den Bereich der Vorformlinge leiten. Beispielsweise ist es möglich, in Transportrichtung der Vorformlinge abwechselnd Heizelemente 116 und Gebläse nacheinander zu positionieren.

Um einen Vorformling derart in einen Behälter umformen zu können, dass der Behälter Materialeigenschaften aufweist, die eine lange Verwendungsfähigkeit von innerhalb des Behälters abgefüllten Lebensmitteln, insbesondere von Getränken, gewährleisten, müssen spezielle Verfahrensschritte bei der Beheizung und Orientierung der Vorformlinge eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

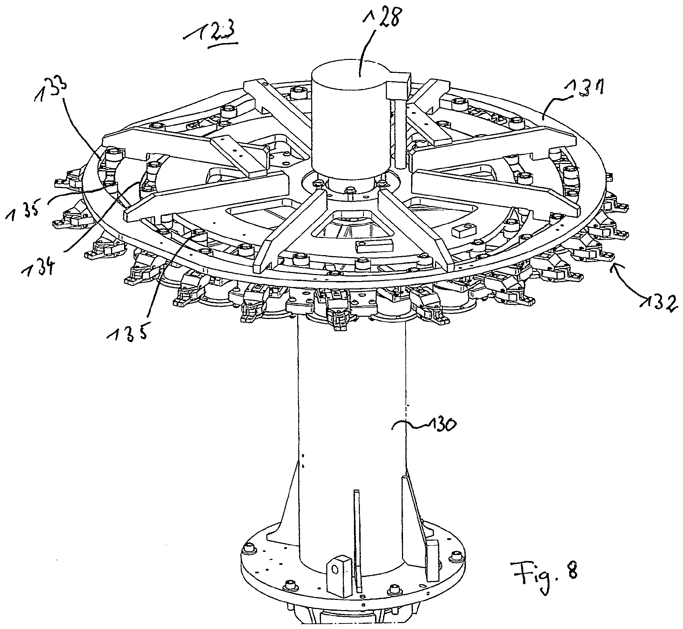

Fig. 8 zeigt in räumlicher Darstellung des Übergaberades in analoger bzw. alternativer Ausführung den zuvor genannten Übergaberädern 123, 125, 126 mit einem an dem Übergaberad angeordneten Servo-Motor 128.

Das Übergaberad 125 sitzt auf einem Lagergehäuse 130, in dem auch die Antriebswelle (nicht dargestellt) gelagert ist. Das Übergaberad 125 weist einen Träger 131 auf, an dem die Aufnahmeelemente in Form von Zangen 132 für die Behälter/Vorformlinge angeordnet sind. Das Übergaberad 125 weist eine erste und eine zweite Steuerkurve 133, 134 auf, über die die Bewegung der Zangen 132 mit in Verbindung mit den Steuerkurven angeordneten Rollen 135 gesteuert werden. Die Zangen 132 werden dabei entweder verschwenkt oder vor/zurück bewegt, um die an einem Übergabepunkt notwendige Teilung bei der Übergabe bereitzustellen.

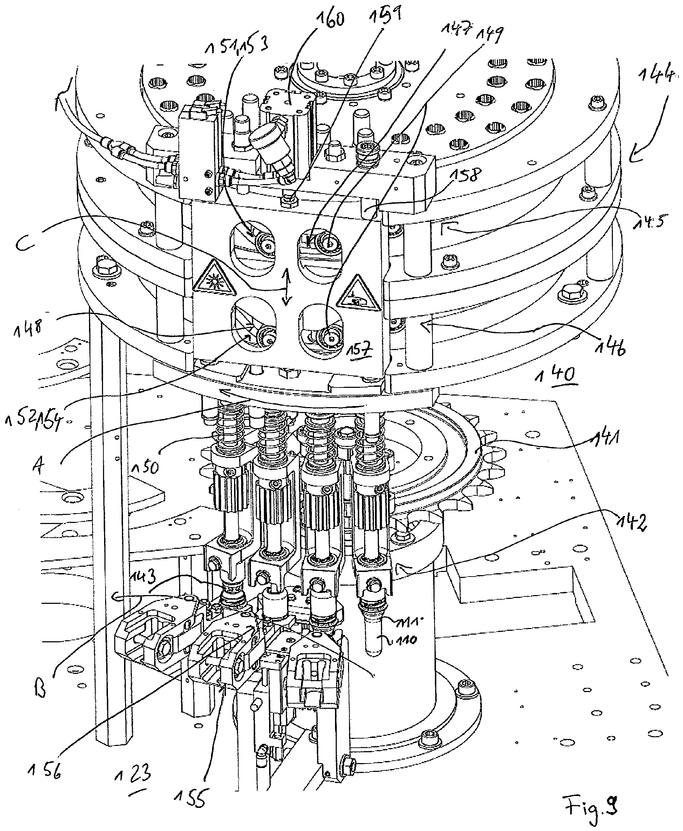

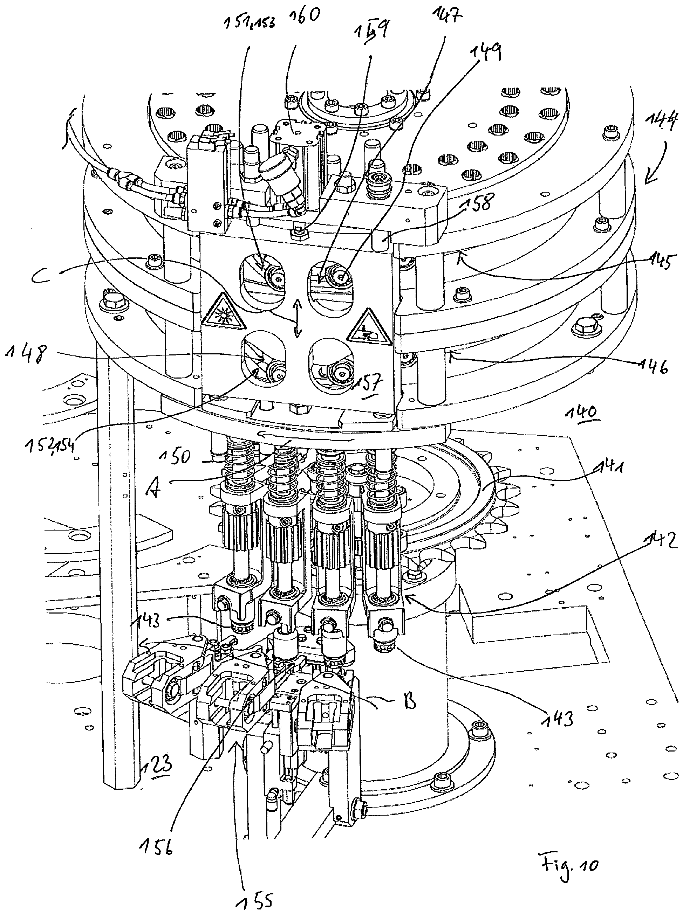

Fig. 9 zeigt einen Übergabeabschnitt 140 einer Heizvorrichtung 102. Diese weist ein Führungsrad 141 auf, das die Kurvenführung der Trageeinrichtungen/Werkezuge 142 in Form von Dorne 142 übernimmt. An den Dornen 142 sind Vorformlinge 110 angeordnet auf deren Innenseite gehalten durch einen Klemmmechanismus 143 (siehe auch Fig. 10). Der Übergabeabschnitt 140 weist ein Steuerungsrad 144 auf, an dem eine erste Kurvensteuerung 145 und eine zweite Kurvensteuerung 146 angeordnet sind. Die erste Kurvensteuerung 145 weist eine Kurve 147, und die zweite Kurvensteuerung 146 weist eine Kurve 148 auf. Innerhalb der Kurven 147, 148 sind Steuerungsrollen 149 angeordnet, über die mechanisch mit dem Dorn 142 gekoppelt sind, so dass die vertikale Bewegung der Dorne 142 und das Öffnen und Schließen des Klemmmechanismus 143 gesteuert wird. Hierfür ist der Dorn 142 gegen eine Feder 150 vertikal beweglich gelagert. Die in der ersten Kurve 147 befindliche Rolle 149 ist mit einer Gabel (nicht dargestellt) verbunden, die in den Dorn 142 eingreift und darüber den Dorn 142 vertikal je nach Lage der Kurve 147 verschiebt. Die in der zweiten Kurve 148 befindliche Rolle 149 ist mit dem Klemmmechanismus 143 verbunden. Wird die Rolle vertikal abgesenkt, öffnet der Klemmmechanismus 143 und gibt den verspannten Vorformling 110 frei.

Beim Transport der Dorne durch die Heizvorrichtung 102 im Heizbereich weisen die Kurven 147, 148 eine konstant horizontale Form auf, so dass sich die vertikale Lage der Dorne 142 nicht ändert und die Vorformlinge 110 in den Klemmmechanismen 143 arretiert sind. Im Übergabeabschnitt 140 weisen die Kurven 147, 148 einen Abschnitt 151, 152 auf, in dem die Kurven 147, 148 als Bogen 153, 154 ausgebildet sind, der nach unten weist, so dass die in den Kurven 147, 148 befindlichen Rollen 149 eine Lageänderung nach unten erfahren, wodurch die Dorne 142 vertikal gemäß der Form des Bogens 153 verfahren werden, und der Klemmmechanismus 143 gemäß Bogen 154 geöffnet wird.

Durch das nach unten Verfahren werden die Vorformlinge 110 in die korrekte Lage für den Eingriff im entsprechend vorgesehenen Bereich mit den Werkzeugen 155 des Übergaberades 123 gebracht. Bei den Werkzeugen 155 handelt es sich um Zangen 155. Diese sind in den Fig. 9 bis 12 stellvertretend für das Übergaberad 123 dargestellt. Die Zangen 55 greifen bei der Übernahme der Vorformlinge 110 den Vorformling 110 beispielsweise unterhalb eines vorgefertigten Mündungsbereichs 111 des Vorformlings 110 von außen. Die Zangen 155 rotieren dabei in Bewegungsrichtung B, wobei sie auf dem Übergaberad 123 so verschwenkt werden, dass sie im Eingriffsbereich 156 zwischen Dorne 142 und Zangen 155 zusätzlich so verschwenkt werden, dass sie mit der Anordnung der Dorne korrespondieren. Wie in Fig. 6 zu sehen ist, umfasst die rechte der drei dargestellten Zangen 155 den am Dorn 142 arretierten Vorformling 110 unterhalb dessen Mündungsbereich 111 im geöffneten Zustand. Anschließend wird der Dorn 142 mit dem Vorformling 110 abgesenkt (mittlere Zange 155), danach wird die Zange 155 um den Vorformling 110 geschlossen, so dass diese den Vorformling 110 greift, der Klemmmechanismus 143 gelöst und der Dorn 142 angehoben (linke Zange 155). Der Vorformling 110 ist damit aus der Heizvorrichtung 102 entnommen und an das Übergaberad 123 übergeben. Die Bewegung der der Dorne und der Zangen ist dabei synchronisiert, so dass sich die beiden Werkzeuge 142, 155 im Eingriffsbereich 156 befinden allerdings sich nicht berühren, solange die Synchronisation besteht.

Geht diese Synchronisation verloren, beispielsweise durch eine Antriebsstörung oder dergleichen, würden sich die Werkzeuge 142, 155 berühren und es würde zu Beschädigungen kommen. Um dieses zu vermeiden sieht die Erfindung vor, dass die Kurvenabschnitte 151, 152, die eine Absenkbewegung der Dorne 142 in den Eingriffsbereich und die Öffnung des Klemmmechanismus 143 und damit die Freigabe des Vorformlings 110 bewirken, beweglich gelagert sind, so dass es möglich ist, die Kurvenabschnitte 150, 151 so aus ihrer Betriebslage zu bewegen, dass die Dorne 142 nicht mehr in den Eingriffsbereich 156 gelangen und damit keine Berührung mit den Zangen 155 entstehen kann und folglich auch keine Beschädigung der Werkzeuge 142, 156 erfolgen kann.

Alternativ oder zusätzlich können entsprechende Abschnitte (nicht dargestellt) der Kurven 133, 134 auf dem Übergaberad 123, die die Zangen 155 in den Bewegungsbereich 156 bringen, beweglich ausgeführt sein, so dass es möglich ist, die Kurvenabschnitte so aus ihrer Betriebslage zu bewegen, dass die Zangen 155 nicht mehr in den Eingriffsbereich 156 gelangen und damit keine Berührung und folglich auch keine Beschädigung der Werkzeuge 142, 155 erfolgen kann. Diese ist in den Figuren nicht dargestellt, der Fachmann kann analog dem nachfolgenden die alternative Ausführung bzw. auch eine Adaption der Erfindung auf die Übergabe der Vorformlinge an die Blasstationen 103 des Blasrades 101 oder die Übergabe der Behälter aus den Blasstationen 103 des Blasrades 101 an das Ausgaberad 127 entsprechend im Rahmen seine fachmännischen Tätigkeit vornehmen.

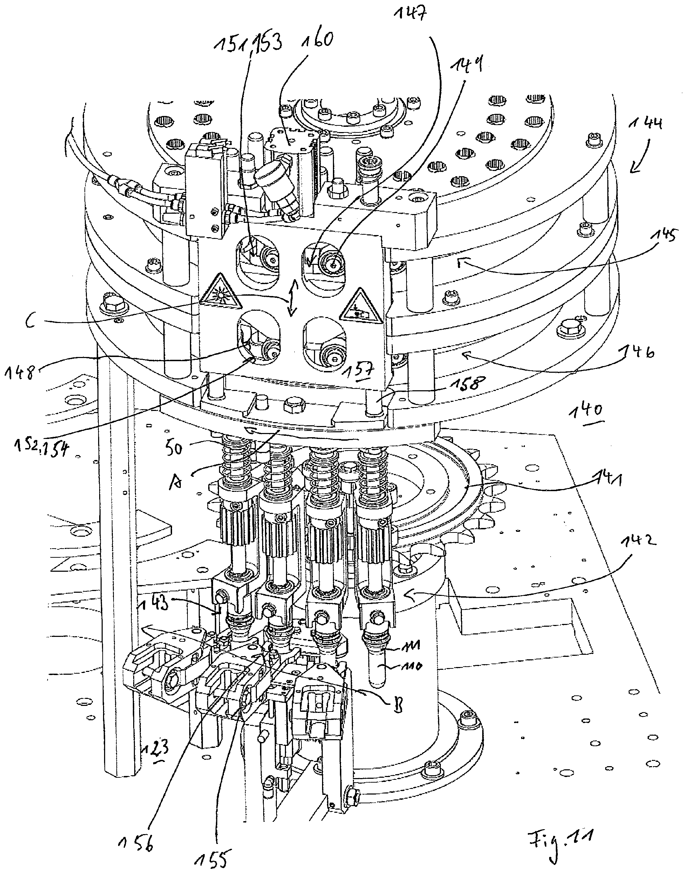

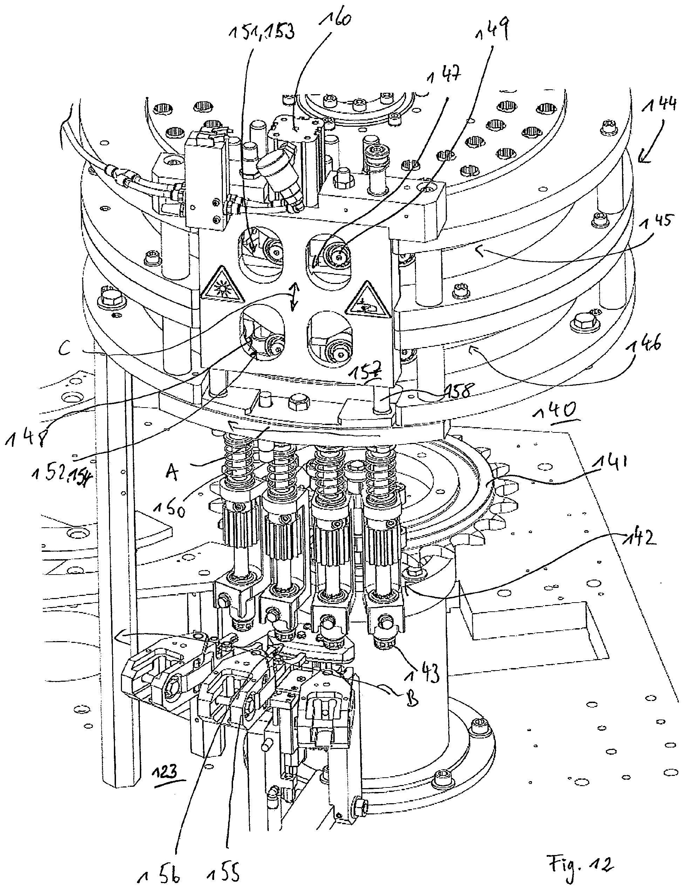

Zum Bewegen der Kurvenabschnitte 151, 152 sind diese mechanisch mit einander über eine Platte 157 verbunden, die mit Führungsstangen 158 vertikal geführt beweglich in Bewegungsrichtung C auf diesen angeordnet ist. Weiterhin ist ein Antrieb 160 vorgesehen, der über eine Verbindung 159 mit der Platte 155 verbunden ist. In Fig. 9 und 10 ist die Platte 157 in der Betriebssituation dargestellt, bei der sich die Werkzeuge 142 im Eingriffsbereich 156 befinden. In Fig. 11 und Fig. 12 ist die Platte 157 in der Störungssituation beispielsweise bei Synchronitätsverlustes dargestellt, bei der sich die Werkzeuge 142 außerhalb des Eingriffsbereichs 156 befinden.

Der vertikale Hub der Kurvenabschnitte 151, 152 der Kurven 147, 148 der Kurvensteuerung 145, 146 bewirkt, dass die Dorne 142 auf dem Transportniveau der Heizvorrichtung 102 verbleiben und damit die Spitzen der Dorne 142, an denen sich die Klemmmechanismen 143 befinden, nicht in den Eingriffsbereich 156 abgesenkt werden, womit eine Berührung mit den Zangen 155 ausgeschlossen wird. Wie hier in Fig. 11 dargestellt ist, befinden sich die an den Dornen 142 befindlichen Vorformlingen 110 in dieser Ausführungsform noch im Eingriffsbereich 156. Im Fall des Synchronitätsverlustes bestünde hier noch die Möglichkeit, dass sich die Zangen 155 und Vorformlinge 110 berühren. In diesem Fall käme es ggf. zu einem Abschlagen der Vorformlinge 110 aus dem Klemmmechanismus 143 aber nicht zu einer Beschädigung der Zangen 155/Dorne 142.

**Bezugszeichenliste**

| | | | |
|---|---|---|---|
| 1 | Blasrad | 32 | Zange |
| 2 | Heizeinrichtung | 33 | Steuerkurve |
| 3 | Blasstation | 34 | Steuerkurve |
| 4 | Formträger | 35 | Umfang |
| 5 | Formträger | 36 | Übergabebereich |
| 6 | Tragarm | 37 | Halteelement |
| 7 | Tragarm | 38 | Sockel |
| 8 | Formhälfte | 39 | Drehgelenk |
| 9 | Formhälfte | 40 | Übergabeabschnitt |
| 10 | Basisschwenklager | 41 | Rotationsachse |
| 11 | Basisschwenklager | 42 | Positionierhebel |
| 12 | Schwenklager | 43 | Kurvenrollen |
| 13 | Schwenklager | 44 | Drehrichtung |
| 14 | Blasradachse | 45 | Längsachse |
| 15 | Lagerabstand | 46 | Sockeldrehachse |
| 16 | Heizelement | 47 | Aufnahmemulde |
| 17 | Reflektor | 48 | Übergabestation |
| 18 | Transportkette | 49 | Übergabebereich |
| 19 | Trageeinrichtung | 50 | Übergaberad |
| 20 | Transportschiene | 51 | Servomotor |
| 21 | Wendeeinrichtung | 52 | Lagergehäuse |
| 22 | Eingaberad | 53 | Antriebswelle |
| 23 | Eingaberad | 54 | Träger |
| 24 | Eingaberad | 55 | Aufnahmeelemente |
| 25 | Übergaberad | 56 | Behälter |
| 26 | Entnahmerad | 57 | Basisträger |
| 27 | Ausgaberad | 59 | Aufnahmeelement |
| 28 | Behälter | 60 | Synchronlaufsicherung |
| 29 | Ausgabestrecke | 61 | Steuerelement |
| 30 | Lagergehäuse | 62 | Steuerelement |
| 31 | Träger | 64 | Grundträger |
| 65 | Aussparung | 142 | Trageeinrichtung / Werkzeug / Dorn |
| 66 | Bolzen | 143 | Klemmmechanismus |
| 67 | Zahn | 144 | Steuerungsrad |
| 68 | Spalt | 145 | Kurvensteuerung |
| | | 146 | Kurvensteuerung |
| 101 | Blasrad | 147 | Kurve |
| 102 | Heizeinrichtung | 148 | Kurve |
| 103 | Blasstation | 149 | Rolle |
| 104 | Formträger | 150 | Feder |
| 105 | Formträger | 151 | Kurvenabschnitt |
| 108 | Formhälfte | 152 | Kurvenabschnitt |
| 109 | Formhälfte | 153 | Bogen |
| 110 | Vorformling | 154 | Bogen |
| 111 | Mündungsbereich | 155 | Werkzeug/Zange |
| 112 | Schwenklager | 156 | Eingriffsbereich |
| 113 | Schwenklager | 157 | Platte |
| 114 | Blasradachse | 158 | Führungsstange |
| 116 | Heizelement | 159 | Verbindung |
| 117 | Reflektor | 160 | Antrieb |
| 118 | Transportkette | A | Transportrichtung Dorne |
| 120 | Zuführeinrichtung | B | Bewegungsrichtung Zangen |
| 123 | Übergaberad | C | Bewegungsrichtung Platte |
| 126 | Entnahmerad | | |
| 127 | Ausgaberad | | |
| 128 | Servomotor | | |
| 129 | Ausgabestrecke | | |
| 130 | Lagergehäuse | | |
| 131 | Träger | | |
| 132 | Zange | | |
| 133 | Steuerkurve | | |
| 134 | Steuerkurve | | |
| 135 | Rolle | | |
| 140 | Übergabeabschnitt | | |
| 141 | Führungsrad | | |

## Patentansprüche

1. Synchronlaufsicherung für Übergabestationen für Vorrichtungen zum Handhaben von Behältern, insbesondere zum Handhaben von flaschenartigen Behältern aus Glas oder Kunststoff mit einem ersten und eine zweiten Drehelement (1, 2, 22, 23, 24, 25, 27, 29), die jeweils mit Aufnahmeelementen (19, 32, 37) für die Behälter (28) versehen sind und jeweils einen motorischen Antrieb aufweisen, wobei die Drehelemente (1, 2, 22, 23, 24, 25, 27, 29) so zueinander angeordnet sind, dass die Behälter (28) in einem Übergabebereich (36) von einem der ersten Aufnahmeelemente (19, 32, 37) auf eines der zweiten Aufnahmeelemente (19, 32, 37) übertragbar sind, **dadurch gekennzeichnet, dass** die Drehelemente (1, 2, 22, 23, 24, 25, 27, 29) jeweils drehverbunden ein Steuerelement (61, 62) mit Eingriffselementen (65, 66, 67) aufweisen, dass die Steuerelemente (61, 62) sich kämmend miteinander im Eingriff befinden, wobei die Steuerelemente (61, 62) so angeordnet sind, dass sie sich im Betriebsfall während der Drehbewegung der Drehelemente (1, 2, 22, 23, 24, 25, 27, 29) berührungslos im Eingriff befinden und dass sie sich im Störungsfall berührend im Eingriff befinden.

2. Synchronlaufsicherung nach Anspruch 1, **dadurch gekennzeichnet, dass** es sich bei den Eingriffelementen (65, 66, 67) um Zähne (66), Bolzen (67), Vorsprünge oder Vertiefungen (65) handelt.

3. Synchronlaufsicherung nach Anspruch 1 oder 2, **dadurch gekennzeichnet, dass** es bei dem Steuerelement um eine Zahnrad (61) und/oder um ein Bolzenrad (62) handelt.

4. Synchronlaufsicherung nach einem der Ansprüche 1 bis 3, **dadurch gekennzeichnet, dass** im Betriebsfall zwischen den Eingriffelementen (65, 66, 67) ein Spalt (68) vorgesehen ist, wobei der Spalt so ausgelegt ist, dass die Aufnahmeelemente im Störungsfall berührungsfrei sind.

5. Verwendung einer Synchronlaufsicherung nach einem der Ansprüche 1 bis 4 in einer Vorrichtung zur Blasformung nach einem der Ansprüche 6 bis 12

6. Vorrichtung zur Blasformung von Behältern aus einem thermoplastischen Material mit wenigstens zwei Behandlungsstationen (101, 102) mit Werkzeugen (142, 155) zum Aufnehmen und Halten von Vorformlingen (110), beispielsweise einer Heizvorrichtung (102) zur Erwärmung der Vorformlinge (110), und einer Blasvorrichtung (101) zur Ausformung von Behältern aus Vorformlingen (110), die mit Blasstationen versehen ist, mit wenigstens einer Übergabevorrichtung (23) zum Transfer der Vorformlinge (110) von einer Behandlungsstation (101, 102) zu einer weiteren Behandlungsstation (101, 102) mit Werkzeugen (142, 155), die zur Entnahme der Vorformlinge (110) aus der Behandlungsstation (101, 102), dem Transport der Vorformlinge (110) zur weiteren Behandlungsstation (101, 102) und zur Abgabe der Vorformlinge (110) an die weitere Behandlungsstation (101, 102) ausgelegt sind, wobei wenigstens eine der Behandlungsstationen (101, 102) und/oder die wenigstens eine Übergabevorrichtung (123) wenigstens eine mechanische Steuervorrichtung (144) zur Vorgabe der Bewegung der Werkzeuge (142, 155) aufweisen, wobei die Werkzeuge (142, 155) in ihrer Bewegung zueinander einen Eingriffsbereich (156) aufweisen und so zueinander angeordnet sind, dass die Bewegung der Werkzeuge (142, 155) in einem Normalbetrieb berührungsfrei erfolgt, und wobei der Antrieb der Behandlungsstationen (11, 12) und/oder der Übergabevorrichtung (123) mittels Einzelantrieben erfolgt, die steuerungstechnisch synchronisiert sind, **dadurch gekennzeichnet, dass** die Werkzeuge (142, 155) wenigstens einer der Behandlungsstationen (1, 2) und/oder der Übergabevorrichtung (123) in einem Störungsfall durch eine Bewegung wenigstens eines Abschnitts (150, 151) der Steuervorrichtung (144) aus dem Eingriffsbereich heraus bewegbar sind.

7. Vorrichtung nach Anspruch 6, **dadurch gekennzeichnet, dass** es sich bei der mechanischen Steuerung um eine Kurvensteuerung (145, 146) handelt.

8. Vorrichtung nach Anspruch 7, **dadurch gekennzeichnet, dass** der Abschnitt (51, 52) der Kurvensteuerung (145, 146) korrespondierend zum Eingriffsbereich (156) bewegbar ausgeführt ist, wobei es sich bevorzugt um eine vertikale Bewegung (C) handelt.

9. Vorrichtung nach einem der Ansprüche 7 bis 8, **dadurch gekennzeichnet, dass** die Bewegung der Steuerung über einen Antrieb (160), bevorzugt über Pneumatikzylinder erfolgt.

10. Vorrichtung nach einem der Ansprüche 6 bis 9, **dadurch gekennzeichnet, dass** es sich bei der den Werkzeugen um Dorne (142) oder Zangen (155) handelt.

11. Vorrichtung nach einem der Ansprüche 6 bis 10, **dadurch gekennzeichnet, dass** mehrere Abschnitt (151, 152) vorgesehen sind, die in ihrer Bewegung mechanisch miteinander gekoppelt sind.

12. Vorrichtung nach einem der Ansprüche 6 bis 11, **dadurch gekennzeichnet, dass** es sich bei den Behandlungsstationen um eine Heizvorrichtung (102), eine Blasvorrichtung (101), eine Sterilisationsvorrichtung, eine Kühlvorrichtung, eine zusätzliche Heizvorrichtung, Reinigungsvorrichtung, Etikettiervorrichtung, und/oder Füllvorrichtung handelt.

13. Vorrichtung nach einem der Ansprüche 6 bis 12, **dadurch gekennzeichnet, dass** eine Synchronlaufsicherung (60) nach einem der Ansprüche 1 bis 4 vorgesehen ist.

14. Verfahren zur Sicherung von Werkzeugen (142, 155) zur Aufnahme und zum Transport von Vorformlingen (110) oder Behältern, bevorzugt Dorne oder Zangen, in Vorrichtungen zur Blasformung, insbesondere nach einem der Ansprüche 6 bis 13, aus einem thermoplastischen Material mit wenigstens zwei Behandlungsstationen (101, 102), beispielsweise einer Heizvorrichtung (101) zur Erwärmung von Vorformlingen (110), und/oder einer Blasvorrichtung (102) zur Ausformung von Behältern aus Vorformlingen (110), die mit Blasstationen versehen ist, und mit wenigstens einer Übergabevorrichtung (23) zum Transfer der Vorformlinge (110) von einer Behandlungsstation (101, 102) zu einer weiteren Behandlungsstation (101, 102) mit Werkzeugen, mit die die Vorformlinge (110) aus der Behandlungsstation (101, 102) entnommen werden, zur weiteren Behandlungsstation (101, 102) transportiert werden und an die weitere Behandlungsstation (101, 102) übergeben werden, wobei die Bewegung der Behandlungsstationen (1, 2), und/oder der Übergabevorrichtung (123) mittels Einzelantrieben erfolgt, die steuerungstechnisch synchronisiert sind, wobei die Werkzeuge (142, 155) in ihrer Bewegung zueinander einen Eingriffsbereich (156) aufweisen und so zueinander angeordnet sind, dass die Bewegung der Werkzeuge (142, 155) in einem Normalbetrieb berührungsfrei erfolgt, und wobei die Bewegung der Werkzeuge (142, 155) durch eine mechanische Steuerung (144), bevorzugt einer Kurvensteuerung (145, 146), gesteuert wird, **dadurch gekennzeichnet, dass** die Werkzeuge (142, 155) wenigstens einer der Behandlungsstationen (101, 102) und/oder der Übergabevorrichtung (123) in einem Störungsfall durch eine Bewegung wenigstens eines Abschnitts (151, 152) der Steuervorrichtung (144) aus dem Eingriffsbereich (156) heraus bewegt werden.

15. Verfahren nach Anspruch 14, **dadurch gekennzeichnet, dass** der Abschnitt (151, 152) der Kurvensteuerung (145, 146) korrespondierend zum Eingriffsbereich (156) bewegt wird, wobei es sich bevorzugt um eine vertikale Bewegung (C) handelt.

## Claims

1. A synchronous running safeguard for transfer stations for devices for handling containers, especially for handling bottle-like containers made of glass or plastic with a first and a second rotary element (1, 2, 22, 23, 24, 25, 27, 29), each of which is provided with receiving elements (19, 32, 37) for the containers (28) and in each case including a motor drive, wherein
the rotary elements (1, 2, 22, 23, 24, 25, 27, 29) are arranged relative to one another so that the containers (28) in a transfer region (36) can be transferred from one of the first receiving elements (19, 32, 37) to one of the second receiving elements (19, 32, 37),
**characterised in that**
- the rotary elements (1, 2, 22, 23, 24, 25, 27, 29) in each case rotationally connected comprise a control element (61, 62) with engagement elements (65, 66, 67), that the control elements (61, 62) are in meshing engagement with one another, wherein the control elements (61, 62) are arranged so that during operation they are in engagement without contact during the rotary movement of the rotary elements (1, 2, 22, 23, 24, 25, 27, 29) and **in that** they are in engagement with contact in the event of a fault.

2. The synchronous running safeguard according to claim 1, **characterised in that** the engagement elements (65, 66, 67) are teeth (66), pins (67), protrusions or depressions (65).

3. The synchronous running safeguard according to claim 1 or 2, **characterised in that** the control element is a gear wheel (61) and/or a pin wheel (62).

4. The synchronous running safeguard according to anyone of the claims 1 to 3, **characterised in that** the engagement elements (65, 66, 67) are arranged to have a gap (68) therebetween during operation, wherein the gap is provided so that the receiving elements are without contact in the event of a fault.

5. The use of a synchronous running safeguard according to anyone of the claims 1 to 4 in a device for blow moulding according to anyone of the claims 6 to 12.

6. A device for blow moulding containers made of a thermoplastic material comprising at least two treatment stations (101, 102) with tools (142, 155) for receiving and holding preforms (110), for example a heating device (102) for heating the preforms (110), and a blowing device (101) for moulding the containers from preforms (110), which is equipped with blowing stations, comprising at least one transfer device (23) for the transfer of the preforms (110) from one treatment station (101, 102) to another treatment station (101, 102) with tools (142, 155), which are designed for removing the preforms (110) from the treatment station (101, 102), for the transport of the preforms (110) to the other treatment station (101, 102) and for passing the preforms (110) on to the other treatment station (101, 102), wherein at least one of the treatment stations (101, 102) and/or the at least one transfer device (123) comprise at least one mechanical control device (144) for defining the movement of the tools (142, 155), wherein the tools (142, 155) in their movement relative to one another have an engagement region (156) and are arranged relative to one another so that the movement of the tools (142, 155) during a normal operation takes place without contact, and wherein individual drives drive the treatment stations (11, 12) and/or the transfer device (123), the individual drives being synchronized in terms of control, **characterised in that** the tools (142, 155) of at least one of the treatment stations (1, 2) and/or of the transfer device (123) are movable out of the engagement region in the event of a fault through a movement of at least one section (150, 151) of the control device (144).

7. The device according to claim 6, **characterised in that** the mechanical control device is a cam control (145, 146).

8. The device according to claim 7, **characterised in that** the section (51, 52) of the cam control (145, 146) is moveable corresponding to the engagement region (156), wherein the movement preferably is a vertical movement (C).

9. The device according to anyone of the claims 7 to 8, **characterised in that** the movement of the control system is produced by a drive (160), preferably by pneumatic cylinders.

10. The device according to anyone of the claims 6 to 9, **characterised in that** the tools are mandrels (142) or tongs (155).

11. The device according to anyone of the claims 6 to 10, **characterised in that** multiple sections (151, 152) are provided, the movement of the sections being mechanically coupled to one another.

12. The device according to anyone of the claims 6 to 11, **characterised in that** the treatment stations are a heating device (102), a blowing device (101), a sterilization device, a cooling device, an additional heating device, cleaning device, labelling device and/or filling device.

13. The device according to anyone of the claims 6 to 12, **characterised in that** a synchronous running safeguard (60) according to anyone of the claims 1 to 4 is provided.

14. A method for securing tools (142, 155) for receiving and for transporting preforms (110) or containers, preferably mandrels or tongs, in devices for blow moulding, especially according to anyone of the claims 6 to 13, made of a thermoplastic material comprising at least two treatment stations (101, 102), for example a heating device (101) for heating preforms (110), and/or a blowing device (102) for moulding containers from preforms (110), which is equipped with blowing stations, and comprising at least one transfer device (23) for the transfer of the preforms (110) from one treatment station (101, 102) to another treatment station (101, 102) with tools, which are designed for removing the preforms (110) from the treatment station (101, 102), for transporting them to the other treatment station (101, 102) and for passing them on to the other treatment station (101, 102), wherein individual drives move the treatment stations (1, 2) and/or the transfer device (123), the individual drives being synchronized in terms of control, wherein the tools (142, 155) in their movement relative to one another have an engagement region (156) and are arranged relative to one another so that the movement of the tools (142, 155) during a normal operation takes place without contact, and wherein the movement of the tools (142, 155) is controlled by means of a mechanical control (144), preferably a cam control (145, 146), **characterised in that** the tools (142, 155) of at least one of the treatment stations (101, 102) and/or of the transfer device (123) are moved out of the engagement region (156) in the event of a fault through a movement of at least one section (151, 152) of the control device (144).

15. The method according to claim 14, **characterised in that** the section (151, 152) of the cam control (145, 146) is moved corresponding to the engagement region (156), wherein the movement preferably is a vertical movement (C).

## Revendications

1. Dispositif de préservation de marche synchrone pour stations de transfert pour dispositifs de manipulation de récipients, notamment pour la manipulation de récipients de type bouteille en verre ou matière plastique, avec un premier et un second élément rotatif (1, 2, 22, 23, 24, 25, 27, 29) lesquels sont respectivement dotés d'éléments de réception (19, 32, 37) pour les récipients (28) et présentent respectivement un entraînement motorisé, les éléments rotatifs (1, 2, 22, 23, 24, 25, 27, 29) étant agencés l'un par rapport à l'autre de façon à ce que les récipients (28) puissent, dans une zone de transfert (36), être remis de l'un des premiers éléments de réception (19, 32, 37) à l'un des seconds éléments de réception (19, 32, 37), **caractérisé en ce que** les éléments rotatifs (1, 2, 22, 23, 24, 25, 27, 29) présentent chacun un élément de commande (61, 62) qui y est respectivement fixé de façon à tourner avec celui-ci et est muni d'éléments de prise (65, 66, 67), et **en ce que** les éléments de commande (61, 62) s'engrènent l'un dans l'autre, les éléments de commande (61, 62) étant agencés de façon à ce que leur engrenage (1, 2, 22, 23, 24, 25, 27, 29) se fasse sans contact pendant la marche lors de la rotation des éléments rotatifs et en contact en cas de dysfonctionnement.

2. Dispositif de préservation de marche synchrone selon la revendication 1, **caractérisé en ce que** les éléments de prise (65, 66, 67) sont des dents (66), des chevilles (67), des saillies ou des évidements (65).

3. Dispositif de préservation de marche synchrone selon la revendication 1 ou 2, **caractérisé en ce que** l'élément de commande est une roue dentée (61) et/ou une roue à chevilles (62).

4. Dispositif de préservation de marche synchrone selon l'une des revendications 1 à 3, **caractérisé en ce qu'**un interstice (68) est prévu entre les éléments de prise (65, 66, 67) pendant la marche, cet interstice étant dimensionné de façon à ce que les éléments de réception ne soient pas en contact en cas de dysfonctionnement.

5. Utilisation d'un dispositif de préservation de marche synchrone selon l'une des revendications 1 à 4 dans un dispositif de moulage par soufflage selon l'une des revendications 6 à 12.

6. Dispositif de moulage par soufflage de récipients en un matériau thermoplastique avec au moins deux stations de traitement (101, 102) dotées de moyens (142, 155) pour saisir et maintenir des préformes (110), par exemple un dispositif de chauffage (102) pour le réchauffement des préformes (110) et un dispositif de soufflage (101) doté de stations de soufflage pour le formage de récipients à partir de préformes (110), avec au moins un dispositif de transfert (23) pour le transfert des préformes (110) d'une station de traitement (101, 102) à une autre station de traitement (101, 102) avec des moyens (142, 155) conçus pour prélever les préformes (110) de la station de traitement (101, 102), transporter les préformes (110) vers la station de traitement (101, 102) suivante et remettre les préformes (110) à la station de traitement (101, 102) suivante, l'une au moins des stations de traitement (101, 102) et/ou le (les) dispositif(s) de transfert (123) présentant au moins un dispositif de commande mécanique (144) pour déterminer le mouvement des moyens (142, 155), les moyens (142, 155) présentant dans leur mouvement relatif une zone d'engagement (156) et étant agencés l'un par rapport à l'autre de façon à ce que le mouvement des moyens (142, 155) dans le cadre d'un fonctionnement normal a lieu sans contact, et l'entraînement des stations de traitement (11, 12) et/ou du dispositif de transfert (123) ayant lieu au moyen d'entraînements individuels à commande synchronisée, **caractérisé en ce qu'**en cas de dysfonctionnement les moyens (142, 155) d'au moins l'une des stations de traitement (1, 2) et/ou du dispositif de transfert (123) peuvent, par un mouvement d'au moins une section (150, 151) du dispositif de commande (144), être déplacés hors de la zone d'engagement.

7. Dispositif selon la revendication 6, **caractérisé en ce que** la commande mécanique est une commande à cames (145, 146).

8. Dispositif selon la revendication 7, **caractérisé en ce que** la section (51, 52) de la commande à cames (145, 146) est réalisée de façon à se mouvoir en correspondance avec la zone d'engagement (156), ce mouvement étant de préférence un mouvement vertical (C).

9. Dispositif selon l'une des revendications 7 à 8, **caractérisé en ce que** la commande est actionnée par un entraînement (160), de préférence par un vérin pneumatique.

10. Dispositif selon l'une des revendications 6 à 9, **caractérisé en ce que** les moyens sont des broches (142) ou des pinces (155).

11. Dispositif selon l'une des revendications 6 à 10, **caractérisé en ce que** plusieurs sections (151, 152) sont prévues qui sont mécaniquement accouplées dans leur mouvement.

12. Dispositif selon l'une des revendications 6 à 11, **caractérisé en ce que** les stations de traitement sont un dispositif de chauffage (102), un dispositif de soufflage (101), un dispositif de stérilisation, un dispositif de refroidissement, un dispositif de chauffage supplémentaire, un dispositif de nettoyage, un dispositif d'étiquetage et/ou un dispositif de remplissage.

13. Dispositif selon l'une des revendications 6 à 12, **caractérisé en ce qu'**est prévu un dispositif de préservation de marche synchrone (60) selon l'une des revendications 1 à 4.

14. Procédé de préservation de moyens (142, 155) pour saisir et maintenir des préformes (110) ou des récipients, de préférence des broches ou des pinces, dans des dispositifs de moulage par soufflage de récipients en un matériau thermoplastique, notamment dans des dispositifs selon l'une des revendications 6 à 13, avec au moins deux stations de traitement (101, 102), par exemple un dispositif de chauffage (101) pour le réchauffement de préformes (110) et/ou un dispositif de soufflage (102) doté de stations de soufflage pour le formage de récipients à partir de préformes (110), et avec au moins un dispositif de transfert (23) pour le transfert des préformes (110) d'une station de traitement (101, 102) à une autre station de traitement (101, 102), avec des moyens avec lesquels les préformes (110) sont prélevées de la station de traitement (101, 102), transportées vers la station de traitement (101, 102) suivante et remises à la station de traitement suivante (101, 102), l'entraînement des stations de traitement (1, 2) et/ou du dispositif de transfert (123) ayant lieu au moyen d'entraînements individuels à commande synchronisée, les moyens (142, 155) présentant dans leur mouvement relatif une zone d'engagement (156) et étant agencés l'un par rapport à l'autre de façon à ce que le mouvement des moyens (142, 155) dans le cadre d'un fonctionnement normal a lieu sans contact, et le mouvement des moyens (142, 155) étant commandé par une commande mécanique (144), de préférence par une commande à cames (145, 146), **caractérisé en ce qu'**en cas de dysfonctionnement les moyens (142, 155) d'au moins l'une des stations de traitement (101, 102) et/ou du dispositif de transfert (123) peuvent, par un mouvement d'au moins une section (151, 152) du dispositif de commande (144), être déplacés hors de la zone d'engagement (156).

15. Procédé selon la revendication 14, **caractérisé en ce que** le mouvement de la section (151, 152) de la commande à cames (145, 146) s'effectue en correspondance avec la zone d'engagement (156), ce mouvement étant de préférence un mouvement vertical (C).
